# EUROPEAN PATENT APPLICATION

(11) **EP 4 429 149 A1**
(43) Date of publication of application: **11.09.2024**
(21) Application number: 21962821.1
(22) Date of filing: 03.11.2021
(51) Int. Cl.: H04L 5/00, H04W 72/04

(54) **RESOURCE DETERMINATION METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2021/128427
(87) International publication number: WO 2023/077302

(57) **Abstract**

The present application discloses a resource determination method and apparatus, a device, and a storage medium, related to the field of mobile communications. The method comprises: a terminal determining a virtual resource block corresponding to a PDSCH indicated by a DCI, according to DCI transmitted by a number n of PDCCH candidate sets; determining a location of a physical resource block of the PDSCH according to locations of the virtual resource block and a physical resource block of a target CORESET, the target CORESET being one of a number m of CORESETs, the m CORESETs comprising a CORESET associated with an SS set corresponding to the n PDCCH candidate sets, and the target CORESET being determined according to information of the m CORESETs. The present application solves the problem of determining the location of a physical resource block according to a CORESET when there are multiple CORESETs, and improves the accuracy of determining the physical resource block.

## Description

### TECHNICAL FIELD

The present disclosure relates to the field of mobile communications, and in particularly to a resource determination method, a resource determination apparatus, a device, and a storage medium.

### BACKGROUND

In a new radio (NR) system, in order to implement sending a same physical downlink control channel (PDCCH) by more than one transmission/reception point (TRP), a network device may configure more than one control resource set (CORESET). Each CORESET is correspondingly configured with one transmission configuration indication (TCI) state. Search space (SS) sets associated with more than one CORESET are configured, that is, multiple SS sets are configured, and associated with the CORESETs and the corresponding TCI states of the CORESETs, respectively. However, because there are more than one CORESET associated with the SS sets corresponding to more than one PDCCH candidates (candidate sets), how to determine a position of a physical resource block of a physical downlink shared Channel (PDSCH) according to the CORESET is an urgent problem to be solved.

### SUMMARY

Embodiments of the present disclosure provide a resource determination method, a resource determination apparatus, a device, and a storage medium, to resolve a problem of determining a position of a physical resource block based on a control resource set (CORESET) in the case that there are more than one CORESET, and to improve an accuracy of determining the physical resource block. The technical solution will be described as follows.

According to one aspect of the present disclosure, a resource determination method is provided. The method is performed by a terminal, and includes:
determining, based on downlink control information (DCI) transmitted by n physical downlink control channel (PDCCH) candidate sets, a virtual resource block corresponding to a physical downlink shared channel (PDSCH) indicated by the DCI; and
determining a position of a physical resource block (PRB) of the PDSCH based on the virtual resource block and a position of a PRB of a target control resource set (CORESET);
in which, the target CORESET belongs to one of m CORESETs, and the m CORESETs comprise CORESETs associated with search space (SS) sets corresponding to the n PDCCH candidate sets, where n is an integer greater than 1, and m is an integer greater than 1.

According to one aspect of the present disclosure, a resource determination method is provided. The method is performed by a network device, and includes:
sending DCI to a terminal based on n PDCCH candidate sets, in which the DCI indicates a virtual resource block corresponding to a PDSCH;
in which, the virtual resource block and a position of a physical resource block (PRB) of a target control resource set (CORESET) jointly determine a position of a PRB of the PDSCH; the target CORESET belongs to one of m CORESETs, and the m CORESETs include CORESETs associated with search space (SS) sets corresponding to the n PDCCH candidate sets, where n is an integer greater than 1, and m is an integer greater than 1.

According to one aspect of the present disclosure, a resource determination apparatus is provided, and includes:
a resource block determining module, configured to determine, based on DCI transmitted by n PDCCH candidate sets, a virtual resource block corresponding to a PDSCH indicated by the DCI; and
a position determining module, configured to determine a position of a PRB of the PDSCH based on the virtual resource block and a position of a PRB of a target CORESET;
in which, the target CORESET belongs to one of m CORESETs, and the m CORESETs include CORESETs associated with SS sets corresponding to the n PDCCH candidate sets, in which n is an integer greater than 1, and m is an integer greater than 1.

According to one aspect of the present disclosure, a resource determination apparatus is provided, and includes:
a sending module, configured to send DCI to a terminal based on n PDCCH candidate sets, in which the DCI indicates a virtual resource block corresponding to a PDSCH;
in which the virtual resource block and a position of a physical resource block (PRB) of a target CORESET jointly determine a position of a PRB of the PDSCH; the target CORESET belongs to one of m CORESETs, and the m CORESETs comprise CORESETs associated with SS sets corresponding to the n PDCCH candidate sets, where n is an integer greater than 1, and m is an integer greater than 1.

According to one aspect of the embodiments of the present disclosure, a terminal is provided. The terminal may include: a processor; a transceiver connected to the processor; and a memory configured to store executable instructions of the processor. The processor is configured to load and execute the executable instructions to implement the resource determination method according to above aspect.

According to one aspect of the present disclosure, a network device is provided. The network device may include: a processor; a transceiver connected to processor; and a memory configured to store executable instructions of the processor. The processor is configured to load and execute the executable instructions to implement the resource determination method according to above aspect.

According to one aspect of the present disclosure, a computer readable storage medium is provided. The computer readable storage medium stores executable program codes, the executable program codes are loaded and executed by a processor to implement the resource determination method according to the above aspects.

According to one aspect of the present disclosure, a chip is provided, the chip includes a programmable logic circuit and/or program instructions, and when the chip runs on a terminal or a network device, the chip is configured to implement the resource determination method in the above aspects.

According to an aspect of this present disclosure, an embodiment of the present disclosure provides a computer program product, when the computer program product is executed by a processor of a terminal or a network device, the computer program product is configured to implement the resource determination method in the above aspects.

The technical solution according to embodiments of the present disclosure may at least include the following beneficial effect.

With the method, the apparatus, the device and the storage medium provided in the embodiments of the present disclosure, the terminal selects the target CORESET from the CORESETs corresponding to n PDCCH candidate sets, and determines the position of the physical resource block corresponding to the PDSCH scheduled by the DCI according to the position of the physical resource block corresponding to the target CORESET and the DCI transmitted by the PDCCH candidate sets, which solves the problem of determining the position of the physical resource block according to the CORESET in the case that there are more than one CORESET, and improves an accuracy of determining the physical resource block.

### BRIEF DESCRIPTION OF THE DRAWINGS

To illustrate the solutions according to the embodiments of the present disclosure more clearly, accompanying drawings needed for describing the embodiments are briefly introduced below. Obviously, the accompanying drawings in the following descriptions are merely some embodiments of the present disclosure, and persons of ordinary skill in the art may obtain other drawings according to the accompanying drawings without making creative efforts.
FIG. 1 is a schematic diagram of a communications system according to an embodiment of the present disclosure.
FIG. 2 is a flowchart of a resource determination method according to an embodiment of the present disclosure.
FIG. 3 is a flowchart of a resource determination method according to an embodiment of the present disclosure.
FIG. 4 is a block diagram of a resource determination apparatus according to an embodiment of the present disclosure.
FIG. 5 is a block diagram of a resource determination apparatus according to an embodiment of the present disclosure.
FIG. 6 is a block diagram of a resource determination apparatus according to an embodiment of the present disclosure.
FIG. 7 is a block diagram of a communication device according to an embodiment of the present disclosure.

### DETAILED DESCRIPTION

In order to make the objective, technical solutions and advantages of the present disclosure more clear, the embodiments of the present disclosure will be described below in connection with the accompanying drawings.

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all the implementations consistent with the present invention. Rather, they are merely examples of the apparatus and method consistent with some aspects of the present invention as detailed in the appended claims.

The terms used in the disclosure are only for the purpose of describing specific embodiments, and are not intended to limit the embodiments of the disclosure. The singular forms of "a", "the" and "said" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

The following describes an application scenario of the present disclosure.

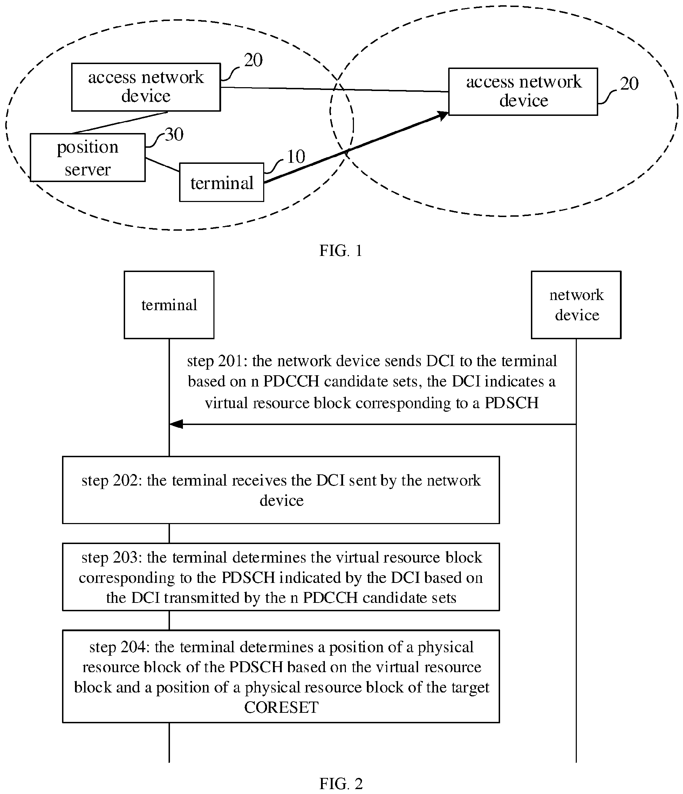

FIG. 1 is a schematic diagram of a communication system according to an embodiment of the present disclosure. The communication system may include terminals 10 and network devices 20.

The number of the terminals 10 is generally more than one. One or more terminals 10 may be distributed within a cell managed by each network device 20. The terminal 10 may include various handheld devices, vehicle-mounted devices, wearable devices and computing devices with the wireless communication function or other processing devices connected to wireless modems, as well as various forms of user equipments (UEs), mobile stations (MSs) and the like. For convenience of description, the above-mentioned devices are collectively referred to as terminals in the embodiments of the disclosure.

The network device 20 is a device deployed in an access network to provide the wireless communication function for the terminal 10. The network device 20 may include various forms of macro base stations, micro base stations, relay stations, access points, and the like. Names of a device with a function of the network device may be different in systems with different wireless access technologies, for example, the device is called gNodeB or gNB in a 5G NR system. With the evolution of communication technologies, the name "network device" may change. For convenience of description, the above-mentioned devices providing the wireless communication function for the terminals 10 are collectively referred to as network devices in the embodiments of the disclosure. A connection may be established between the network device 20 and the terminal 10 through an air interface, so that communication is performed via the connection, including exchanging signaling and data. There may be multiple network devices 20, and two adjacent network devices 20 may perform communication in a wired or wireless way. The terminal 10 may switch between different network devices 20, that is, establish connections with different network devices 20.

The "5G NR system" in the embodiments of the disclosure may also be called a 5G system or an NR system, but those skilled in the art may understand the meaning thereof. The technical solution described in the embodiments of the disclosure may be applied to the 5G NR system, and may also be applied to a subsequent evolution system of the 5G NR system.

FIG. 2 is a flowchart of a resource determination method according to an embodiment of the present disclosure, the method is applicable to the terminal as shown in FIG. 1. The method includes at least a portion of the following contents.

At step 201, a network device sends downlink control information (DCI) to the terminal based on n physical downlink control channel (PDCCH) candidate sets, the DCI indicates a virtual resource block corresponding to a physical downlink shared channel (PDSCH).

In the embodiments of the present disclosure, if the network device needs to transmit service data, the network device needs to send the DCI to the terminal based on the n PDCCH candidate sets. The DCI indicates the virtual resource block corresponding to the PDSCH for transmitting the service data. Since there is a mapping relationship between virtual resource blocks and physical resource blocks, a position of the physical resource block may be determined based on the virtual resource block.

At step 202, the terminal receives the DCI sent by the network device.

At step 203, the terminal determines the virtual resource block corresponding to the PDSCH indicated by the DCI based on the DCI transmitted by the n PDCCH candidate sets.

At step 204, the terminal determines a position of a physical resource block of the PDSCH based on the virtual resource block and a position of a physical resource block of the target CORESET.

The target CORESET belongs to one of m CORESETs, and the m CORESETs include CORESETs associated with search space (SS) sets corresponding to the n PDCCH candidate sets. In the embodiments of the present disclosure, n is an integer greater than 1, and m is an integer greater than 1.

The physical resource block may refer to continuous symbols in a time domain and continuous subcarriers in a frequency domain. A size of the virtual resource block is the same as a size of a corresponding physical resource block.

Each of the m CORESETs corresponds to one transmission configuration indication (TCI) state, and the network device activates a corresponding CORESET through the TCI state carried in a medium access control (MAC) control element (CE). In addition, each CORESET is further associated with at least one SS set. But one SS set is associated with only one CORESET, and each SS set corresponds to one PDCCH candidate set. It may indicate that each PDCCH candidate set in the n PDCCH candidate sets in the embodiments of the present disclosure corresponds to one SS set, and each SS set is associated with one CORESET.

In the embodiments of the present disclosure, the network device may indicate the virtual resource block corresponding to the PDSCH through the DCI. After receiving the DCI, the terminal determines a serial number of the virtual resource block indicated by the DCI, and may further determine the position of the physical resource block occupied by the target CORESET, so that the terminal may determine the position of the physical resource block corresponding to the PDSCH based on the serial number of the virtual resource block and the physical resource block occupied by the target CORESET.

In some embodiments, the terminal determines the position of the physical resource block of the PDSCH based on the serial number of the virtual resource block and the position of the physical resource block with a smallest serial number in physical resource blocks occupied by the target CORESET. It may be understood that the frequency domain resources occupied by the target CORESET include more than one consecutive physical resource block, and the physical resource block with the smallest serial number in the physical resource blocks occupied by the target CORESET is a start PRB occupied by the target CORESET, that is, the PRB at a lowest frequency position.

Alternatively, there is a mapping relationship between the virtual resource block and the physical resource block. Therefore, the terminal obtains a sum of the serial number of the virtual resource block and the serial number of the physical resource block with the smallest serial number in the physical resource blocks occupied by the target CORESET, and determines a position of a physical resource block indicated by the sum as the position of the physical resource block of the PDSCH.

It may also be understood that the terminal obtains a serial number n of the virtual resource block, and a serial number of a corresponding physical resource block is n+Nstart, where Nstart indicates the physical resource block with the smallest serial number in the physical resource blocks occupied by the target CORESET.

It should be noted that the embodiments of the present disclosure are only described by taking steps 201-204 as an example. In another embodiment, the steps performed by the network device may be implemented as one step, and steps performed by the terminal may be implemented as one step.

It should be noted that the DCI transmitted by all the PDCCH candidate sets in the n PDCCH candidate sets in the embodiments of the present disclosure is the same DCI.

In some embodiments, frequency domain resources of the m CORESETs are different.

Each of the m CORESETs corresponds to the frequency domain resource. The frequency domain resources of different CORESETs are different. Therefore, in the embodiments of the present disclosure, the terminal needs to determine the target CORESET from the m CORESETs, and then determines the position of the physical resource block of the PDSCH based on the start PRB of the target CORESET.

In the embodiments of the present disclosure, in case that the frequency domain resources of the m CORESETs are different, the target CORESET may be determined from the m CORESETs, and further the position of the physical resource block of the PDSCH may be determined. Therefore, the position of the physical resource block may still be determined in case that the frequency domain resources of more than one CORESET are different, and the accuracy of determining the physical resource block is improved.

In some embodiments, the SS sets corresponding to the n PDCCH candidate sets are common SS sets.

Each of the n PDCCH candidate sets corresponds to one SS set, and the SS set corresponding to each PDCCH candidate set is the common SS set. In this case, the terminal may determine the serial number of the virtual resource block based on the received DCI, and then determine the position of the physical resource block of the PDSCH based on the virtual resource block.

In the embodiments of the present disclosure, when it is determined that the SS set corresponding to the PDCCH candidate set is the common SS set, the position of the physical resource block of the PDSCH is determined according to the virtual resource block indicated by the DCI and the target CORESET, thereby improving the accuracy of determining the physical resource block.

In some embodiments, a format of the DCI is DCI format 1_0.

After receiving the DCI sent through the PDCCH candidate set, if the terminal determines that the format of the DCI is DCI format 1_0, the terminal may determine the serial number of the virtual resource block based on the received DCI, and determine the position of the physical resource block of the PDSCH based on the serial number of the virtual resource block.

In embodiments of the present disclosure, when it is determined that the format of the DCI is DCI format 1_0, the position of the physical resource block of the PDSCH is determined according to the virtual resource block indicated by the DCI and the target CORESET, thereby improving the accuracy of determining the physical resource block.

In some embodiments, identifiers of the n PDCCH candidate sets are the same.

If the identifiers of the n PDCCH candidate sets are the same, the n PDCCH candidate sets may transmit the same DCI.

In embodiments of the present disclosure, the identifiers of the n PDCCH candidate sets are the same, which ensures that the n PDCCH candidate sets transmit the same DCI, and improves the accuracy of transmitting the DCI.

In some embodiments, the SS sets corresponding to the n PDCCH candidate sets have a link relationship.

If the SS sets corresponding to the n PDCCH candidate sets have a link relationship, it indicates that the PDCCH candidate sets corresponding to the SS sets having the link relationship also have a link relationship. Therefore, the n PDCCH candidate sets also have a link relationship, and the n PDCCH candidate sets may transmit the same DCI.

In embodiments of the present disclosure, The SS sets corresponding to the n PDCCH candidate sets have a link relationship, so that the n PDCCH candidate sets also have a link relationship, and the n PDCCH candidate sets may transmit the same DCI, so that the accuracy of transmitting the DCI is improved.

In some embodiments, the mapping relationship between the virtual resource block and the physical resource block is a non-interleaved mapping.

In the method provided in embodiments of the present disclosure, the terminal selects the target CORESET from the CORESETs corresponding to the n PDCCH candidate sets, and determines the position of the physical resource block corresponding to the PDSCH scheduled by the DCI according to the position of the physical resource block corresponding to the target CORESET and the DCI transmitted by the PDCCH candidate sets, which solves the problem of determining the position of the physical resource block according to the CORESET in the case that there are more than one CORESET, and improves the accuracy of determining the physical resource block.

On the basis of the embodiment shown in FIG. 2, the target CORESET determined according to the information of the m CORESETs includes at least one of the following.
(1) The target CORESET is a CORESET with a smallest CORESET identifier in the m CORESETs.

Each CORESET corresponds to a CORESET identifier, and the CORESET with the smallest CORESET identifier in the m CORESETs is determined as the target CORESET.

For example, if the CORESET identifier of the first CORESET is 1, and the CORESET identifier of the second CORESET is 2, then the first CORESET is determined as the target CORESET.

(2) The target CORESET is a CORESET associated with an SS set with a smallest SS set identifier in the SS sets.

Each PDCCH candidate set corresponds to an SS set. The CORESET associated with the SS set with the smallest SS set identifier in the SS sets corresponding to the PDCCH candidate sets is determined as the target CORESET.

For example, if the first PDCCH candidate set corresponds to an SS set1, and the second PDCCH candidate set corresponds to an SS set2, then the CORESET associated with the SS set1 is determined as the target CORESET.

(3) The target CORESET is a CORESET corresponding to a PRB with a smallest PRB starting number in the frequency domain resources occupied by the CORESETs in the m CORESETs.

Each CORESET occupies a frequency domain resource, and the frequency domain resource includes more than one PRB. When determining the target CORESET, the CORESET corresponding to the PRB with the smallest PRB starting number in the frequency domain resources occupied by the CORESETs in the m CORESETs is determined as the target CORESET.

It should be noted that in all the embodiments included in the present disclosure, a PRB may be replaced with a resource block (RB).

In addition, the smaller the PRB number of the PRB, the lower the frequency domain position indicated by the PRB.

For example, if the first CORESET includes PRB4, PRB5, and PRB6, and the second CORESET includes PRB3, PRB4, and PRB5, then the CORESET corresponding to the PRB3 is determined as the target CORESET.

(4) The target CORESET is a CORESET associated with an SS set corresponding to a PDCCH candidate set with an earliest sending start time in the n PDCCH candidate sets.

The n PDCCH candidate sets have different sending start time. Therefore, when determining the target CORESET, the CORESET associated with the SS set corresponding to the PDCCH candidate set with the earliest sending start time is determined as the target CORESET.

For example, the sending start time of the first PDCCH candidate set is symbol 0 of a first slot, and the sending start time of the second PDCCH candidate set is symbol 7 of the first slot, then the CORESET associated with the SS set corresponding to the first PDCCH candidate set whose sending start time is the symbol 0 is determined as the target CORESET.

(5) The target CORESET is a CORESET associated with an SS set corresponding to a PDCCH candidate set with a latest sending start time in the n PDCCH candidate sets.

The n PDCCH candidate sets have different sending start time. Therefore, when determining the target CORESET, the CORESET associated with the SS set corresponding to the PDCCH candidate set with the latest sending start time is determined as the target CORESET.

For example, the sending start time of the first PDCCH candidate set is symbol 0 of the first slot, and the sending start time of the second PDCCH candidate set is symbol 7 of the first slot, then the CORESET associated with the SS set corresponding to the second PDCCH candidate set whose sending start time is the symbol 7 is determined as the target CORESET.

(6) The target CORESET is a CORESET associated with an SS set corresponding to a PDCCH candidate set with an earliest sending end time in the n PDCCH candidate sets.

The n PDCCH candidate sets have different sending end time. Therefore, when determining the target CORESET, the CORESET associated with the SS set corresponding to the PDCCH candidate set with the earliest sending end time is determined as the target CORESET.

For example, the sending end time of the first PDCCH candidate set is symbol 3 of the first slot, and the sending end time of the second PDCCH candidate set is symbol 10 of the first slot, then the CORESET associated with the SS set corresponding to the first PDCCH candidate set whose sending end time is the symbol 10 is determined as the target CORESET.

(7) The target CORESET is a CORESET associated with an SS set corresponding to a PDCCH candidate set with a latest sending end time in the n PDCCH candidate sets.

The n PDCCH candidate sets have different sending end time. Therefore, when determining the target CORESET, the CORESET associated with the SS set corresponding to the PDCCH candidate set with the latest sending end time is determined as the target CORESET.

For example, the sending end time of the first PDCCH candidate set is symbol 3 of the first slot, and the sending end time of the second PDCCH candidate set is symbol 10 of the first slot, then the CORESET associated with the SS set corresponding to the second PDCCH candidate set whose sending end time is the symbol 10 is determined as the target CORESET.

In the method provided in embodiments of the present disclosure, the target CORESET is selected from the m CORESETs according to information corresponding to the CORESETs, so that the problem that the physical resource block of the PDSCH cannot be determined based on the CORESET in the case that there are more than one CORESET is solved, and the accuracy of determining the physical resource block is improved.

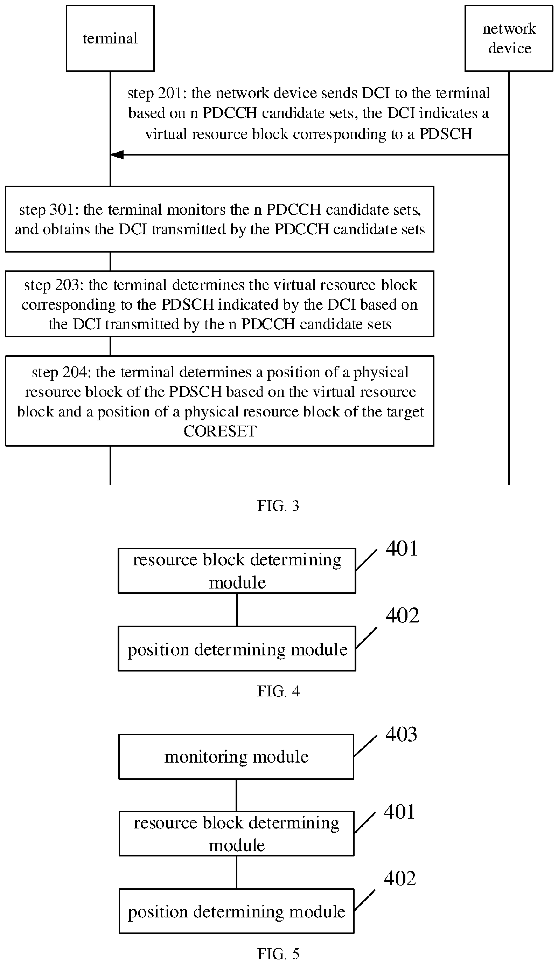

On the basis of the embodiment shown in FIG. 2, the network device sends the DCI to the terminal, and the terminal monitors the n PDCCH candidate sets to receive the DCI. As shown in FIG. 3, the method further includes the following step.

At step 301, the terminal monitors the n PDCCH candidate sets, and obtains the DCI transmitted by the PDCCH candidate sets.

In embodiment of the present disclosure, the terminal performs blind detections on the n PDCCH candidate sets, so that the terminal detects the DCI transmitted by each PDCCH candidate set in the n PDCCH candidate sets. Subsequently, the terminal determines the position of the physical resource block of the PDSCH according to the DCI.

FIG. 4 is a block diagram of a resource determination apparatus according to an embodiment of the present disclosure. As shown in FIG. 4, the apparatus includes a resource block determining module 401 and a position determining module 402.

The resource block determining module 401 is configured to determine, based on DCI transmitted by n PDCCH candidate sets, a virtual resource block corresponding to a PDSCH indicated by the DCI.

The position determining module 402 is configured to determine a position of a physical resource block of the PDSCH based on the virtual resource block and a position of a physical resource block of the target CORESET.

The target CORESET belongs to one of m CORESETs, and the m CORESETs include CORESETs associated with SS sets corresponding to the n PDCCH candidate sets, where n is an integer greater than 1, and m is an integer greater than 1.

With the apparatus provided in embodiments of the present disclosure, the terminal selects the target CORESET from the CORESETs corresponding to n PDCCH candidate sets, and determines the position of the physical resource block corresponding to the PDSCH scheduled by the DCI according to the position of the physical resource block corresponding to the target CORESET and the DCI transmitted by the PDCCH candidate sets, which solves the problem that the position of the physical resource block cannot be determined according to the CORESET in the case that there are more than one CORESET, and improves the accuracy of determining the physical resource block.

In some embodiments, the target CORESET is any one of the following:
a CORESET with a smallest CORESET identifier in the m CORESETs;
a CORESET associated with an SS set with a smallest SS set identifier in the SS sets;
a CORESET corresponding to a PRB with a smallest PRB starting number in frequency domain resources occupied by the CORESETs in the m CORESETs;
a CORESET associated with an SS set corresponding to a PDCCH candidate set with an earliest sending start time in the n PDCCH candidate sets;
a CORESET associated with an SS set corresponding to a PDCCH candidate set with a latest sending start time in the n PDCCH candidate sets;
a CORESET associated with an SS set corresponding to a PDCCH candidate set with an earliest sending end time in the n PDCCH candidate sets; or
a CORESET associated with an SS set corresponding to a PDCCH candidate set with a latest sending end time in the n PDCCH candidate sets.

In some embodiments, referring to FIG. 5, the apparatus further includes a monitoring module 403.

The monitoring module 403 is configured to monitor the n PDCCH candidate sets, and obtain the DCI transmitted by the PDCCH candidate sets.

In some embodiments, frequency domain resources of the m CORESETs are different.

In some embodiments, the SS sets corresponding to the n PDCCH candidate sets are common SS sets.

In some embodiments, a format of the DCI is DCI format 1_0.

In some embodiments, identifiers of the n PDCCH candidate sets are the same.

In some embodiments, the SS sets corresponding to the n PDCCH candidate sets have a link relationship.

In some embodiments, a mapping relationship between the virtual resource block and the physical resource block is a non-interleaved mapping.

It should be noted that, when the apparatus provided in the above embodiments implements its function, the division of the above function modules is given as an example. In practical applications, the above functions may be allocated to different function modules according to requirements, that is, the internal structure of the apparatus is divided into different function modules to complete all or part of the functions described above. In addition, the apparatus embodiments and the method embodiments belong to the same concept. For the detailed implementation process, reference can be made to the method embodiments, which is not repeated here.

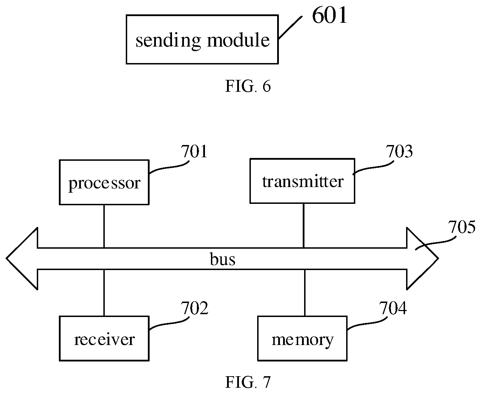

FIG. 6 is a block diagram of a resource determination apparatus according to an embodiment of the present disclosure. As shown in FIG. 6, the apparatus includes a sending module 601.

The sending module 601 is configured to send DCI to a terminal based on n PDCCH candidate sets, in which the DCI indicates a virtual resource block corresponding to a PDSCH.

The terminal is configured to determine a position of a physical resource block of the PDSCH based on the virtual resource block and a position of a physical resource block of a target CORESET. The target CORESET belongs to one of m CORESETs, and the m CORESETs include CORESETs associated with SS sets corresponding to the n PDCCH candidate sets, where n is an integer greater than 1, and m is an integer greater than 1.

With the apparatus provided in embodiments of the present disclosure, the terminal selects the target CORESET from the CORESETs corresponding to n PDCCH candidate sets, and determines the position of the physical resource block corresponding to the PDSCH scheduled by the DCI according to the position of the physical resource block corresponding to the target CORESET and the DCI transmitted by the PDCCH candidate set, which solves the problem that the position of the physical resource block cannot be determined according to the CORESET in the case that there are more than one CORESET, and improves the accuracy of determining the physical resource block.

In some embodiments, the target CORESET is any one of the following:
a CORESET with a smallest CORESET identifier in the m CORESETs;
a CORESET associated with an SS set with a smallest SS set identifier in the SS sets;
a CORESET corresponding to a PRB with a smallest PRB starting number in frequency domain resources occupied by the CORESETs in the m CORESETs;
a CORESET associated with an SS set corresponding to a PDCCH candidate set with an earliest sending start time in the n PDCCH candidate sets;
a CORESET associated with an SS set corresponding to a PDCCH candidate set with a latest sending start time in the n PDCCH candidate sets;
a CORESET associated with an SS set corresponding to a PDCCH candidate set with an earliest sending end time in the n PDCCH candidate sets; or
a CORESET associated with an SS set corresponding to a PDCCH candidate set with a latest sending end time in the n PDCCH candidate sets.

In some embodiments, frequency domain resources of the m CORESETs are different.

In some embodiments, the SS sets corresponding to the n PDCCH candidate sets are common SS sets.

In some embodiments, a format of the DCI is DCI format 1_0.

In some embodiments, identifiers of the n PDCCH candidate sets are the same.

In some embodiments, the SS sets corresponding to the n PDCCH candidate sets have a link relationship.

In some embodiments, a mapping relationship between the virtual resource block and the physical resource block is a non-interleaved mapping.

It should be noted that, when the apparatus provided in the above embodiment implements its function, the division of the above function modules is given as an example. In practical applications, the above functions may be allocated to different function modules according to requirements, that is, the internal structure of the apparatus is divided into different function modules to complete all or part of the functions described above. In addition, the apparatus embodiments and the method embodiments belong to the same concept. For the detailed implementation process, reference can be made to the method embodiments, which is not repeated here.

FIG. 7 is a block diagram of a communication device according to an embodiment of the present disclosure. The communication device includes a processor 701, a receiver 702, a transmitter 703, a memory 704 and a bus 705.

The processor 701 includes one or more processing cores, and the processor 701 executes various function applications and information processing by running a software program or a module.

The receiver 702 and the transmitter 703 may be implemented as a communication component, which may be a communication chip.

The memory 704 is communicatively coupled to the processor 701 through the bus 705.

The memory 704 may be configured to store at least one program code, and the processor 701 is configured to execute the at least one program code to implement all steps in the above embodiment.

The communication device may be a terminal or a network device. The memory 704 may be implemented by any type of volatile or non-volatile storage devices or their combination. The volatile or non-volatile storage device includes but not limited to a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory and a programmable read-only memory (PROM).

In an embodiment, a computer-readable storage medium is further provided. The readable storage medium stores executable program codes, and the executable program codes are loaded and executed by a processor to implement the resource determination method executed by the communication device provided in the above method embodiments.

In an embodiment, a chip is provided, the chip includes a programmable logic circuit and/or program instructions, and when the chip runs on a terminal or a network device, the chip is configured to implement the resource determination method provided in the method embodiments.

In an embodiment, a computer program product is provided, and when the computer program product is executed by a processor of a terminal or a network device, the computer program product is configured to implement the resource determination method provided in the foregoing method embodiments.

Those skilled in the art may understand that all or part of the blocks in the above embodiments may be implemented by hardware, or by relevant hardware under instructions of a program, in which the program may be stored in a computer readable storage medium which may be a read-only memory, a magnetic disk or an optical disk, etc.

The above are only some optionally embodiments in embodiments of the present disclosure, and do not constitute the limitation of the present disclosure. Any modification, equivalent replacement, improvement, etc., made within the spirit and principle of embodiments of the present disclosure shall be included within the protection scope of embodiments of the present disclosure.

## Claims

1. A resource determination method, performed by a terminal, comprising:
determining, based on downlink control information (DCI) transmitted by n physical downlink control channel (PDCCH) candidate sets, a virtual resource block corresponding to a physical downlink shared channel (PDSCH) indicated by the DCI; and
determining a position of a physical resource block (PRB) of the PDSCH based on the virtual resource block and a position of a PRB of a target control resource set (CORESET);
wherein, the target CORESET belongs to one of m CORESETs, and the m CORESETs comprise CORESETs associated with search space (SS) sets corresponding to the n PDCCH candidate sets, wherein n is an integer greater than 1, and m is an integer greater than 1.

2. The method of claim 1, wherein the target CORESET is at least one of:
a CORESET with a smallest CORESET identifier in the m CORESETs;
a CORESET associated with an SS set with a smallest SS set identifier in the SS sets;
a CORESET corresponding to a PRB with a smallest PRB starting number in frequency domain resources occupied by the CORESETs in the m CORESETs;
a CORESET associated with an SS set corresponding to a PDCCH candidate set with an earliest sending start time in the n PDCCH candidate sets;
a CORESET associated with an SS set corresponding to a PDCCH candidate set with a latest sending start time in the n PDCCH candidate sets;
a CORESET associated with an SS set corresponding to a PDCCH candidate set with an earliest sending end time in the n PDCCH candidate sets; or
a CORESET associated with an SS set corresponding to a PDCCH candidate set with a latest sending end time in the n PDCCH candidate sets.

3. The method of claim 1 or 2, further comprising:
monitoring the n PDCCH candidate sets, and obtaining the DCI transmitted by the n PDCCH candidate sets.

4. The method of any one of claims 1 to 3, wherein the m CORESETs have different frequency domain resources.

5. The method of any one of claims 1 to 4, wherein the SS sets corresponding to the n PDCCH candidate sets are common SS sets.

6. The method of any one of claims 1 to 5, wherein a format of the DCI is DCI format 1_0.

7. The method of any one of claims 1 to 6, wherein identifiers of the n PDCCH candidate sets are the same.

8. The method of any one of claims 1 to 7, wherein the SS sets corresponding to the n PDCCH candidate sets have a link relationship.

9. The method of any one of claims 1 to 8, wherein a mapping relationship between the virtual resource block and the physical resource block is a non-interleaved mapping.

10. A resource determination method, performed by a network device, comprising:
sending downlink control information (DCI) to a terminal based on n physical downlink control channel (PDCCH) candidate sets, wherein the DCI indicates a virtual resource block corresponding to a physical downlink shared channel (PDSCH);
wherein the virtual resource block and a position of a physical resource block (PRB) of a target control resource set (CORESET) jointly determine a position of a PRB of the PDSCH; the target CORESET belongs to one of m CORESETs, and the m CORESETs comprise CORESETs associated with search space (SS) sets corresponding to the n PDCCH candidate sets, wherein n is an integer greater than 1, and m is an integer greater than 1.

11. The method of claim 10, wherein the target CORESET is any one of:
a CORESET with a smallest CORESET identifier in the m CORESETs;
a CORESET associated with an SS set with a smallest SS set identifier in the SS sets;
a CORESET corresponding to a PRB with a smallest PRB starting number in frequency domain resources occupied by the CORESETs in the m CORESETs;
a CORESET associated with an SS set corresponding to a PDCCH candidate set with an earliest sending start time in the n PDCCH candidate sets;
a CORESET associated with an SS set corresponding to a PDCCH candidate set with a latest sending start time in the n PDCCH candidate sets;
a CORESET associated with an SS set corresponding to a PDCCH candidate set with an earliest sending end time in the n PDCCH candidate sets; or
a CORESET associated with an SS set corresponding to a PDCCH candidate set with a latest sending end time in the n PDCCH candidate sets.

12. The method of claim 10 or 11, wherein the m CORESETs have different frequency domain resources.

13. The method of any one of claims 10 to 12, wherein the SS sets corresponding to the n PDCCH candidate sets are common SS sets.

14. The method of any one of claims 10 to 13, wherein a format of the DCI is DCI format 1_0.

15. The method of any one of claims 10 to 14, wherein identifiers of the n PDCCH candidate sets are the same.

16. The method of any one of claims 10 to 15, wherein the SS sets corresponding to the n PDCCH candidate sets have a link relationship.

17. The method of any one of claims 10 to 16, wherein a mapping relationship between the virtual resource block and the physical resource block is a non-interleaved mapping.

18. A resource determination apparatus, comprising:
a resource block determining module, configured to determine, based on downlink control information (DCI) transmitted by n physical downlink control channel (PDCCH) candidate sets, a virtual resource block corresponding to a physical downlink shared channel (PDSCH) indicated by the DCI; and
a position determining module, configured to determine a position of a physical resource block (PRB) of the PDSCH based on the virtual resource block and a position of a PRB of a target control resource set (CORESET);
wherein, the target CORESET belongs to one of m CORESETs, and the m CORESETs comprise CORESETs associated with search space (SS) sets corresponding to the n PDCCH candidate sets, wherein n is an integer greater than 1, and m is an integer greater than 1.

19. The apparatus of claim 18, wherein the target CORESET is any one of:
a CORESET with a smallest CORESET identifier in the m CORESETs;
a CORESET associated with an SS set with a smallest SS set identifier in the SS sets;
a CORESET corresponding to a PRB with a smallest PRB starting number in frequency domain resources occupied by the CORESETs in the m CORESETs;
a CORESET associated with an SS set corresponding to a PDCCH candidate set with an earliest sending start time in the n PDCCH candidate sets;
a CORESET associated with an SS set corresponding to a PDCCH candidate set with a latest sending start time in the n PDCCH candidate sets;
a CORESET associated with an SS set corresponding to a PDCCH candidate set with an earliest sending end time in the n PDCCH candidate sets; or
a CORESET associated with an SS set corresponding to a PDCCH candidate set with a latest sending end time in the n PDCCH candidate sets.

20. The apparatus of claim 18 or 19, further comprising:
a monitoring module, configured to monitor the n PDCCH candidate sets, and obtain the DCI transmitted by the n PDCCH candidate sets.

21. The apparatus of any one of claims 18 to 20, wherein the m CORESETs have different frequency domain resources.

22. The apparatus of any one of claims 18 to 21, wherein the SS sets corresponding to the n PDCCH candidate sets are common SS sets.

23. The apparatus of any one of claims 18 to 22, wherein a format of the DCI is DCI format 1_0.

24. The apparatus of any one of claims 18 to 23, wherein identifiers of the n PDCCH candidate sets are the same.

25. The apparatus of any one of claims 18 to 24, wherein the SS sets corresponding to the n PDCCH candidate sets have a link relationship.

26. The apparatus of any one of claims 18 to 25, wherein a mapping relationship between the virtual resource block and the physical resource block is a non-interleaved mapping.

27. A resource determination apparatus, comprising:
a sending module, configured to send downlink control information (DCI) to a terminal based on n physical downlink control channel (PDCCH) candidate sets, wherein the DCI indicates a virtual resource block corresponding to a physical downlink shared channel (PDSCH);
wherein the virtual resource block and a position of a physical resource block (PRB) of a target control resource set (CORESET) jointly determine a position of a PRB of the PDSCH; the target CORESET belongs to one of m CORESETs, and the m CORESETs comprise CORESETs associated with search space (SS) sets corresponding to the n PDCCH candidate sets, wherein n is an integer greater than 1, and m is an integer greater than 1.

28. The apparatus of claim 27, wherein the target CORESET is at least one of:
a CORESET with a smallest CORESET identifier in the m CORESETs;
a CORESET associated with an SS set with a smallest SS set identifier in the SS sets;
a CORESET corresponding to a PRB with a smallest PRB starting number in frequency domain resources occupied by the CORESETs in the m CORESETs;
a CORESET associated with an SS set corresponding to a PDCCH candidate set with an earliest sending start time in the n PDCCH candidate sets;
a CORESET associated with an SS set corresponding to a PDCCH candidate set with a latest sending start time in the n PDCCH candidate sets;
a CORESET associated with an SS set corresponding to a PDCCH candidate set with an earliest sending end time in the n PDCCH candidate sets; or
a CORESET associated with an SS set corresponding to a PDCCH candidate set with a latest sending end time in the n PDCCH candidate sets.

29. The apparatus of claim 27 or 28, wherein the m CORESETs have different frequency domain resources.

30. The apparatus of any one of claims 27 to 29, wherein the SS sets corresponding to the n PDCCH candidate sets are common SS sets.

31. The apparatus of any one of claims 27 to 30, wherein a format of the DCI is DCI format 1_0.

32. The apparatus of any one of claims 27 to 31, wherein identifiers of the n PDCCH candidate sets are the same.

33. The apparatus of any one of claims 27 to 32, wherein the SS sets corresponding to the n PDCCH candidate sets have a link relationship.

34. The apparatus of any one of claims 27 to 33, wherein a mapping relationship between the virtual resource block and the physical resource block is a non-interleaved mapping.

35. A terminal, comprising:
a processor; and
a transceiver connected to the processor;
wherein, the processor is configured to load and execute instructions to implement the resource determination method according to any one of claims 1 to 9.

36. A network device, comprising:
a processor; and
a transceiver connected to the processor;
wherein, the processor is configured to load and execute instructions to implement the resource determination method according to any one of claims 10 to 17.

37. A computer readable storage medium, wherein the computer readable storage medium stores executable codes, the executable codes are loaded and executed by a processor to implement the resource determination method according to any one of claims 1 to 17.
